# EUROPEAN PATENT SPECIFICATION

(11) **EP 2 727 374 B1**
(45) Date of publication and mention of the grant of the patent: **25.07.2018**
(21) Application number: 12727569.1
(22) Date of filing: 08.06.2012
(51) Int. Cl.: H04N 21/4788, H04N 21/442

(54) **SYSTEMS AND METHODS FOR RECOMMENDING MATCHING PROFILES IN AN INTERACTIVE MEDIA GUIDANCE APPLICATION**
SYSTEM UND VERFAHREN ZUR EMPFEHLUNG ENTSPECHENDER PROFILE IN EINEM INTERAKTIVEN PROGRAMFÜHRER
SYSTÈME ET PROCÉDÉ DE RECOMMENDATION DE PROFILS DANS UNE APPLICATION DE GUIDE DE PROGRAMME INTERACTIF

(30) Priority: 28.06.2011 US 201113170641
(43) Date of publication of application: 07.05.2014
(60) Divisional application: 18176846.6
(73) Proprietor: Rovi Guides, Inc., San Jose, CA 95002 (US)
(72) Inventor: LEE, Bo, Hye, Los Angeles, CA 90039 (US)
(74) Representative: Pisani, Diana Jean
(86) International application number: PCT/US2012/041490
(87) International publication number: WO 2013/002998

(56) References cited:
- WO-A1-2011/017311
- US-A1- 2006 271 953
- US-A1- 2008 288 596
- US-A1- 2009 300 680

## Description

### Background of the Invention

This invention relates generally to interactive media guidance applications, and more particularly, to recommending matching profiles in an interactive media guidance application.

Matching services and other social networking services, for example, attempt to connect two or more individuals that the service believes will have a successful relationship (e.g., for matching services) or will become "friends" (e.g., social networking services). These services identify prospective matches by searching for common entries among individuals' profiles, where the entries are self-generated by the individuals, or by searching for any friends that the individuals may have in common. However, these techniques do not account for the large number of variables that can determine whether the individuals will be compatible. Moreover, these services only search for profiles within the respective service, which includes only a small sub-set of potential matches.

The profiles associated with these services often contain content that is completely generated by the individual. For example, the individual enters his or her own likes or interests, as well as any other personal information, including self-descriptors and work information. Whether through error or deceptive intent, the information contained in such profiles may be unreliable. Moreover, information may be missing from profiles because the individual decides not to enter the information or the service does not provide the opportunity to enter certain information. Where either or both individuals have unreliable profiles or are missing information that is relevant to providing a match, a prospective match may not be made, or where a prospective match is made, the individuals are unlikely to be compatible.

US2009/300680 discloses a media viewing method and system monitors user interaction with an electronic program guide. An awareness engine collects data generated by the user interaction and forms awareness indicators and information. The awareness information is output to end users and is indicative of which users in a social circle are accessing (e.g. viewing, playing, or recording) or have accessed which media works. Some output enables user-to-user interaction. The media works may be supplied by cable television, satellite television, online or global computer network sources.

WO 2011/017311 discloses a system and method for enabling a user to interact with a social networking structure for an internet website on a video device connected to a network enabled host device is provided. The present disclosure provides for accessing an internet site in response to a user input, the user input initiated while outputting a program to a display (402), retrieving content from the internet site based on at least one characteristic associated with the program (410), and outputting the retrieved content in an overlay or user interface (700) on the display simultaneous with the program (412). The user interface (700) provides the ability to access multiple profiles for determining whose content or message to display, and also includes a rotating carousel message display system, with a current message (702) surrounded above and below by a previous message (706) and a next message (714) in the display queue in a different size or font.

US 2010/017469 discloses a method for providing a certified photograph in a network environment is offered that includes interfacing with one or more end users and managing information related to one or more of the end users. The method further includes displaying one or more photos of the end users and providing a label on the photos that certifies the photos as being substantially accurate.

The present invention is set out in the independent claims, with some optional features set out in the claims dependent thereto.

### Brief Description of the Drawings

The above and other objects and advantages of the invention will be apparent upon consideration of the following detailed description, taken in conjunction with the accompanying drawings, in which like reference characters refer to like parts throughout, and in which:
FIG. 1 shows an illustrative display screen using a grid format that may be used to provide guidance for various types of media according to some embodiments of the present invention;
FIG. 2 shows an illustrative display screen using a mosaic that may be used to provide guidance for various types of media according to some embodiments of the present invention;
FIG. 3 shows an illustrative user equipment device according to some embodiments of the present invention;
FIG. 4A shows a diagram of an illustrative cross-platform interactive media system according to some embodiments of the present invention;
FIG. 4B shows an illustrative recommendation system according to some embodiments of the present invention;
FIG. 5 shows an illustrative display screen that includes recommended matching partner profiles according to some embodiments of the present invention;
FIG. 6 shows an illustrative display screen that includes an extended partner profile according to some embodiments of the present invention;
FIG. 7 shows an illustrative display screen that includes an option to register with the provider of a partner profile according to some embodiments of the present invention;
FIG. 8 shows an illustrative flow diagram for displaying recommended partner profiles according to some embodiments of the present invention; and
FIG. 9 shows an illustrative flow diagram for communicating with an individual associated with a selected partner profiles according to some embodiments of the present invention.

### Detailed Description of Embodiments

Systems and methods are provided for recommending matching profiles in an interactive media guidance application.

An interactive media guidance application (or, media guidance application) provides an interface that allows users to efficiently navigate through media selections and easily identify media assets that they may desire. As used herein, a "media asset" refers to particular media content, such as a television program, movie, trailer, commercial, advertisement, program listing, interactive game, internet website, mobile application, song, podcast, streaming radio, e-book, etc.

Interactive media guidance applications may take various forms depending on the media for which they provide guidance. One typical type of media guidance application is an interactive television program guide. Interactive television program guides (sometimes referred to as electronic program guides) are well-known media guidance applications that, among other things, allow users to navigate among and locate many types of media content (which may be referred to herein as "programs" or "programming") including conventional television programming (provided via traditional broadcast, cable, satellite, Internet, or other means), as well as pay-per-view programs, on-demand programs (as in video-on-demand (VOD) systems), Internet content (e.g., streaming media, downloadable media, Webcasts, etc.), recorded programs, and other types of media or video content. Media guidance applications may also allow users to navigate among and locate content related to the video content including, for example, video clips, articles, advertisements, chat sessions, games, etc.

With the advent of the Internet, mobile computing, and high-speed wireless networks, users are accessing media on personal computers (PCs) and other devices on which they traditionally did not, such as hand-held computers, personal digital assistants (PDAs), mobile telephones, vehicle entertainment systems, or other mobile devices. On these devices users are able to navigate among and locate the same media available through a television. Consequently, media guidance is necessary on these devices, as well. The guidance provided may be for media content available only through a television, for media content available only through one or more of these devices, or for media content available both through a television and one or more of these devices. The media guidance applications may be provided as on-line applications (i.e., provided on a web-site), or as stand-alone applications or clients on hand-held computers, PDAs, mobile telephones, or other mobile devices. The various devices and platforms that may implement media guidance applications are described in more detail below.

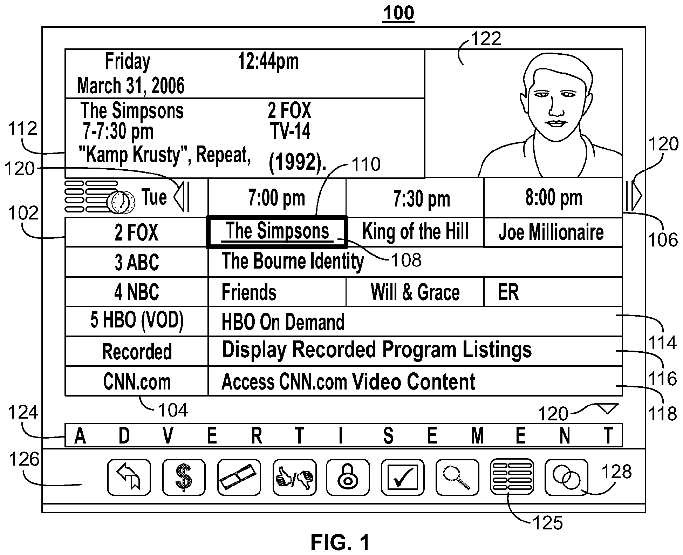

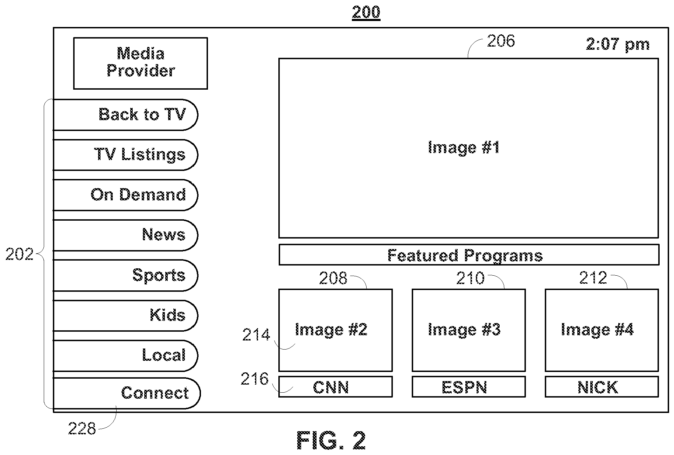

One of the functions of the media guidance application is to provide media listings and media information to users. FIGS. 1 and 2 show illustrative display screens that may be used to provide media guidance, and in particular media listings. The display screens shown in FIGS. 1 and 2 may be implemented on any suitable device or platform. As defined herein, platform refers to any system that may support the operation of an interactive media guidance application. While the displays of FIGS. 1 and 2 are illustrated as full screen displays, they may also be fully or partially overlaid over media content being displayed.

A user may indicate a desire to access media information by selecting a selectable option provided in a display screen (e.g., a menu option, a listings option, an icon, a hyperlink, etc.) or pressing a dedicated button (e.g., a GUIDE button) on a remote control or other user input interface or device. In response to the user's indication, the media guidance application may provide a display screen with media information organized in one of several ways, such as by time and channel in a grid, by time, by channel, by media type, by category (e.g., movies, sports, news, children, or other categories of programming), or other predefined, user-defined, or other organization criteria.

FIG. 1 shows illustrative grid program listings display 100 arranged by time and channel that enables access to different types of media content in a single display. Display 100 may include grid 102 with: (1) a column of channel/media type identifiers 104, where each channel/media type identifier (which is a cell in the column) identifies a different channel or media type available; and (2) a row of time identifiers 106, where each time identifier (which is a cell in the row) identifies a time block of programming. Grid 102 also includes cells of program listings, such as program listing 108, where each listing provides the title of the program provided on the listing's associated channel and time. With a user input device, a user may select program listings by moving highlight region 110. Information relating to the program listing selected by highlight region 110 may be provided in program information region 112. Region 112 may include, for example, the program title, the program description, the time the program is provided (if applicable), the channel the program is on (if applicable), the program's rating, and other desired information.

In addition to providing access to linear programming provided according to a schedule, a media guidance application may also provide access to non-linear programming which is not provided according to a schedule. Non-linear programming may include content from different media sources including on-demand media content (e.g., video-on-demand (VOD) systems), Internet content (e.g., streaming media, downloadable media, etc.), gaming content (e.g., interactive games accessible through a game console, the internet, etc.), locally stored media content (e.g., video content stored on a digital video recorder (DVR), digital video/versatile disc (DVD), video cassette, compact disc (CD), etc.), or other time-insensitive media content. On-demand content may include both movies and original media content provided by a particular media provider (e.g., HBO On Demand providing "The Sopranos" and "Curb Your Enthusiasm"). HBO ON DEMAND, THE SOPRANOS, and CURB YOUR ENTHUSIASM are trademarks owned by the Home Box Office, Inc. Internet content may include web events, such as a chat session or Webcast, or content available on-demand as streaming media or downloadable media through an Internet web site or other Internet access (e.g., FTP).

Grid 102 may provide listings for non-linear programming including on-demand listing 114, recorded media listing 116, and Internet content listing 118. A display combining listings for content from different types of media sources is sometimes referred to as a "mixed-media" display. The various permutations of the types of listings that may be displayed may be based on user selection or guidance application definition (e.g., a display of only recorded and broadcast listings, only on-demand and broadcast listings, etc.), and any suitable permutation may be used. As illustrated, listings 114, 116, and 118 are shown as spanning the entire time block displayed in grid 102 to indicate that selection of these listings may provide access to a display dedicated to on-demand listings, recorded listings, or Internet listings, respectively. In other embodiments, listings for these media types may be included directly in grid 102. Additional listings may be displayed in response to the user selecting one of the navigational icons 120. (Pressing an arrow key on a user input device may affect the display in a similar manner as selecting navigational icons 120) .

Display 100 may also include video region 122, advertisement 124, and options region 126. Video region 122 may allow the user to view and/or preview programs that are currently available, will be available, or were available to the user. The content of video region 122 may correspond to, or be independent from, one of the listings displayed in grid 102. Grid displays including a video region are sometimes referred to as picture-in-guide (PIG) displays. PIG displays and their functionalities are described in greater detail in Satterfield et al. U.S. Pat. No. 6,564,378, issued May 13, 2003 and Yuen et al. U.S. Pat. No. 6,239,794, issued May 29, 2001. PIG displays may be included in other media guidance application display screens of the present invention.

Advertisement 124 may provide an advertisement for media content that, depending on a viewer's access rights (e.g., for subscription programming), is currently available for viewing, will be available for viewing in the future, or may never become available for viewing, and may correspond to or be unrelated to one or more of the media listings in grid 102. Advertisement 124 may also be for products or services related or unrelated to the media content displayed in grid 102. Advertisement 124 may be selectable and may provide information about media content, provide information about a product or a service, enable purchasing of media content, a product, or a service, provide media content relating to the advertisement, etc. Advertisement 124 may be targeted based on a user's media guidance profile/preferences, monitored user activity, the type of display provided, or any other suitable targeted advertisement technique.

While advertisement 124 is shown as rectangular or banner shaped, advertisements may be provided in any suitable size, shape, and location in a guidance application display. For example, advertisement 124 may be provided as a rectangular shape that is horizontally adjacent to grid 102. This is sometimes referred to as a panel advertisement. In addition, advertisements may be overlaid over media content or a guidance application display screen or embedded within a display screen. Advertisements may also include text, images, rotating images, video clips, or other types of media content. Advertisements may be stored in the user equipment with the guidance application, in a database connected to the user equipment, in a remote location (including streaming media servers), or on other storage means or a combination of these locations. Providing advertisements in a media guidance application is discussed in greater detail in, for example, Knudson et al., U.S. Patent Application Publication No. 2003/0110499 A1, published Jun. 12, 2003, Ward, III et al. U.S. Pat. No. 6,756,997, issued Jun. 29, 2004, and Schein et al. U.S. Pat. No. 6,388,714, issued May 14, 2002. It will be appreciated that advertisements may be included in other media guidance application display screens of the present invention.

Options region 126 may allow the user to access different types of media content, media guidance application displays, and/or media guidance application features. Options region 126 may be part of display 100 (and other display screens of the present invention), or may be invoked by a user by selecting an on-screen option or pressing a dedicated or assignable button on a user input device. The selectable options within options region 126 may concern features related to program listings in grid 102 or may include options available from a main menu display. Features related to program listings may include searching for other air times or ways of receiving a program, recording a program, enabling series recording of a program, setting a program and/or channel as a favorite, purchasing a program, or other features. Options available from a main menu display may include search options, VOD options, parental control options, options to access various types of listing displays, options to subscribe to a premium service, options to edit a user's media guidance profile, options to access a browse overlay, or other options.

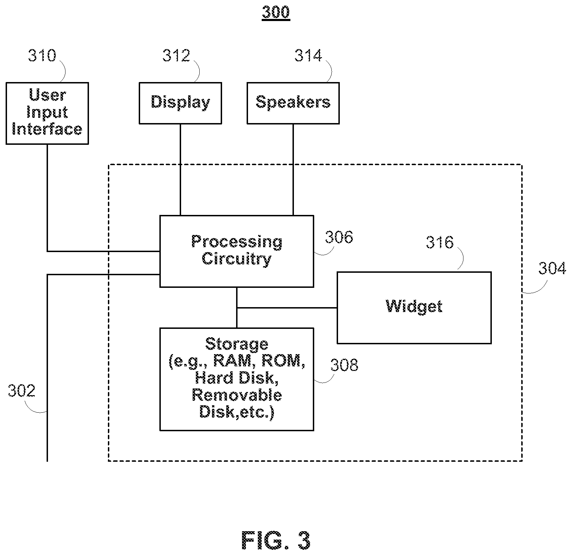

Media guidance application features that may be available through options region 126, or any other suitable selectable options in any other suitable display (e.g., display 200 of FIG. 2), may include, for example, music and interactive game applications. Music applications may be located remotely as on-line music applications or may be stored locally on the user's media guidance equipment (e.g., storage 308 of FIG. 3). Music applications may allow a user to, for example, download music, listen to and/or preview music, organize music libraries, and search for music related to other media guidance information (e.g., music related to program listings in grid 102 of FIG. 1). Interactive game applications may allow a user to, for example, download and play interactive games within the media guidance application. The interactive games may be related to or independent from other media located within the media guidance application. There may be any number of other interactive applications that are accessible via an interactive media guidance application, and these applications may contain content that is complimentary to, or distinct from, content provided by the interactive media guidance application.

Options region 126 may also include an option 128 to display recommended partner profiles to a user of the interactive media guidance application. As defined herein, a "partner profile" is a profile that is provided by a service provider (or sometimes referred to herein as a "provider"), where the provider is separate and distinct from the provider of the interactive media guidance application. The providers of the partner profiles may be matching services, social-networking services, professional networking services, blogging or micro-blogging services, or any other suitable services. The partner profile is associated with a particular individual, where at least one attribute of the partner profile is generated expressly by the individual. In some embodiments, the content of the partner profile is completely generated by the individual.

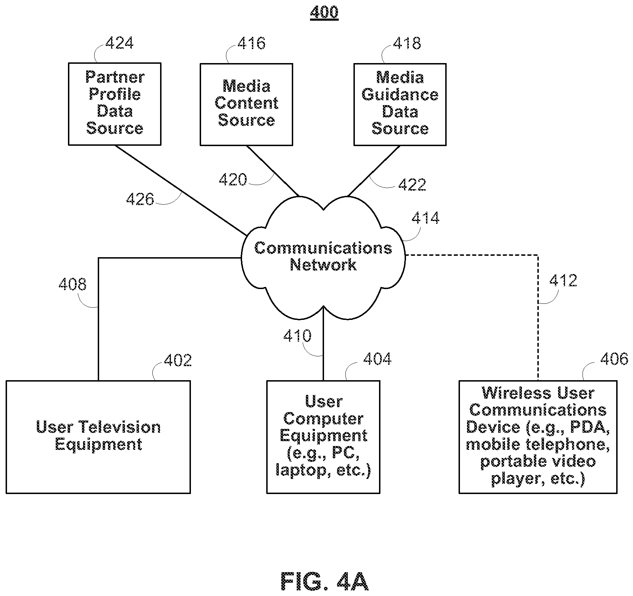

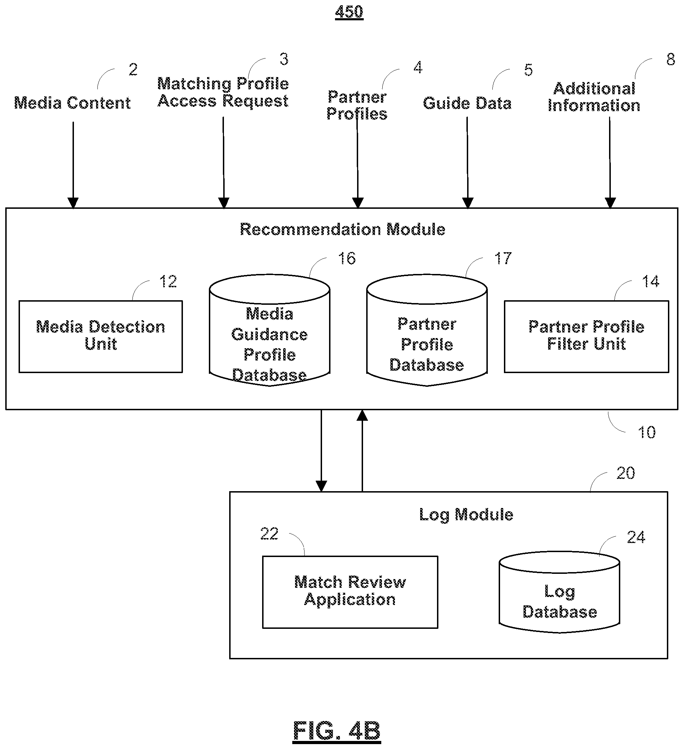

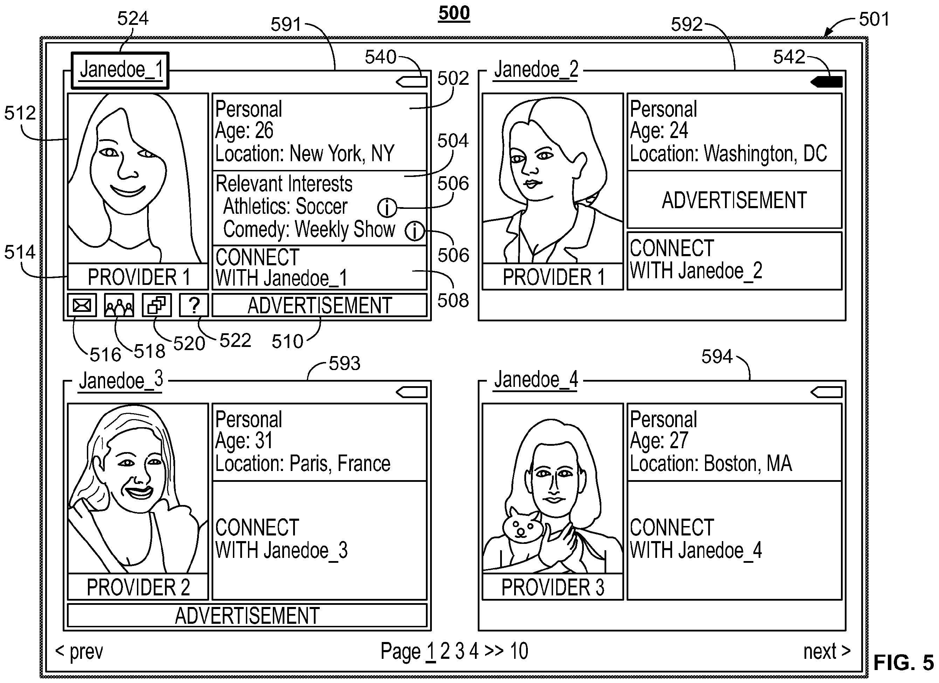

Option 128 may link the user to a display screen containing recommended profiles or may cause an overlay to be displayed over grid programs listing display 100. As will be discussed in more detail in connection with FIGS. 4-9, the recommended partner profiles (e.g., recommended partner profiles 591-594 of FIG. 5) may be selected, for example, by a recommendation module implemented with the media guidance application by comparing attributes associated with the partner profiles to attributes associated with a media guidance profile, where the media guidance profile may be automatically generated by the interactive media guidance application.

The media guidance application may be personalized based on a user's preferences. A personalized media guidance application may allow a user to customize displays and features to create a personalized "experience" with the media guidance application. This personalized experience may be created by allowing a user to input these customizations and/or by the media guidance application monitoring user activity to determine various user preferences. Users may access their personalized guidance application by logging in or otherwise identifying themselves to the guidance application. Customization of the media guidance application may be made in accordance with a media guidance profile, which may be customized for each user who will be interacting with the media guidance application. The customizations may include varying presentation schemes (e.g., color scheme of displays, font size of text, etc.), aspects of media content listings displayed (e.g., only HDTV programming, user-specified broadcast channels based on favorite channel selections, re-ordering the display of channels, recommended media content, etc.), desired recording features (e.g., recording or series recordings for particular users, recording quality, etc.), parental control settings, and other desired customizations.

As defined herein, a "media guidance profile" is a profile associated with a user of the media guidance application. In some embodiments, the media guidance application may allow a user to provide media guidance profile information or may automatically compile media guidance profile information. The media guidance application may, for example, monitor the media the user accesses and/or other interactions the user may have with the media guidance application. Additionally, the media guidance application may obtain all or part of other profiles that are related to a particular user (e.g., from other web sites on the Internet the user accesses, from other media guidance applications the user accesses, from other interactive applications the user accesses, from a handheld device of the user, etc.), and/or obtain information about the user from other sources that the media guidance application may access. As a result, a user may be provided with a unified guidance application experience across the user's different devices. This type of user experience is described in greater detail below in connection with FIG. 4A. Additional personalized media guidance application features are described in greater detail in Ellis et al., U.S. Patent Application Publication No. 2005/0251827 A1, published Nov. 10, 2005, Boyer et al., U.S. Pat. No. 7,165,098, issued Jan. 16, 2007, and Ellis et al., U.S. Patent Application Publication No. 2002/0174430 A1, published Nov. 21, 2002.

As discussed above, the interactive media guidance application automatically creates a media guidance profile, for example, based on monitoring a user's interactions. The interactive media guidance application may be capable of distinguishing between individual users and may develop individualized media guidance profiles. For example, in some embodiments, each user may enter login credentials to the media guidance application using a respective PIN or other identification number or username and password. In some embodiments, a user may identify himself or herself by voice command. Further, in some embodiments each user may have an individualized user input device.

When the user interacts with the interactive media guidance application, the application may record the user's actions and the circumstances surrounding those actions at a data store such as data store 16 of FIG. 4B. For example, when the user changes channels, the media guidance application may record, among other things, information about the first channel, the changed-to channel, the time that the change was made, the identification of the programming that was displayed on the first channel, the identification of the programming that was displayed on the changed-to channel, the time of the change, the identification of any advertisement that was displayed on the first channel at the time of the change, the identification of any advertisement that was displayed on the changed-to channel, and the media guidance application display screen in which user changed channels. The media guidance application may also record instructions from the user to record or watch a program, whether the instruction is once, daily, weekly, or regularly, for example. The media guidance application may also record whether the user changes the volume of the television audio, and if so, what circumstances surrounded the change in volume. For example, when a commercial is displayed, a user may decide to lower the volume or mute the commercial. If the user changes channels while in grid program listings display 100 of FIG. 1, for example, the media guidance application may record information about what was displayed in each of the windows of display 100 before and after the change.

The media guidance application may also record information when there is an absence of a user interaction. For example, the media guidance application may record whether a user continues to view an advertisement rather than changing channels. As another example, the media guidance application may record whether a user typically changes the channel after a program has ended or continues to watch the programming on that particular network. The media guidance application may also calculate and record the duration of time that the user views media on any particular day and with any particular user equipment device such as those discussed below in connection with FIG. 4A, for example.

The media guidance application may also record information surrounding the user's interaction with external sources of information, such as the Internet. For example, if a user performs an online search, the media guidance application may record the user's search query criteria, the search engine used to make the search, the items selected by the viewer from the search response, interaction by the user with Internet sites, and user interactions with the media guidance application during the same time-frame as the viewer interacts with the Internet.

In some embodiments, the media guidance application may be a client-server application where the client resides on the user equipment device (e.g., user equipment device 300 of FIG. 3). The user interactions may be stored over any suitable period (e.g., a minute, an hour, a complete user session), and the stored user interactions may be sent upstream after each collection period to be analyzed. For example, a media guidance application may be implemented partially as a client application on control circuitry 304 of user equipment device 300 and partially on a remote server as a server application (e.g., media guidance data source 418 of FIG. 4A). The collected user actions may be used by the media guidance data source 418 to generate a media guidance profile.

Using the profile data and the statistics collected about a particular user, the media guidance application may "learn" to recognize a finer breakdown about the various types of data collected and then uses the learned information to determine various user preferences. For example, if the media guidance application detects that the user watches sports programs, and that a number of sports programs are basketball games, the application may analyze the teams involved in the programs watched. The media guidance application may thus be able to determine whether the user is a fan of a particular team. If so, the application may record the user's team affiliation as a user preference. Generating, maintaining and utilizing media guidance profiles, such as media guidance profiles associated with television programming and other types of media assets, are discussed in more detail in Alexander et al., U.S. Patent No. 6,177,931, issued January 23, 2001, Ellis et al., U.S. Patent No. 7,185,355, issued February 27, 2007, and Baumgartner et al., U.S. Patent Application Publication No. 2005/0160458, published July 21, 2005. In addition, Cordray et al. U.S. Patent Application Publication No. 2007/0157242, published Jul. 5, 2007 and Archer et al., U.S. Patent Application Publication No. 2008/0301732, published Dec. 4, 2008, discuss associating the viewing history and recording-related actions with a media guidance profile that can be shared and/or implemented among a plurality of user equipment devices.

Another display arrangement for providing media guidance is shown in FIG. 2. Video mosaic display 200 includes selectable options 202 for media content information organized based on media type, genre, and/or other organization criteria. In display 200, regions 206, 208, 210, and 212 may be provided, for example, as broadcast program listings. Unlike the listings from FIG. 1, the listings in display 200 are not limited to simple text (e.g., the program title) and icons to describe media. Rather, in display 200 the listings may provide graphical images including cover art, still images from the media content, video clip previews, live video from the media content, advertisements, or other types of media that indicate to a user the media content being described by the listing. Each of the graphical listings may also be accompanied by text to provide further information about the media content associated with the listing. For example, region 208 may include more than one region, including media region 214 and text region 216. Media region 214 and/or text region 216 may be selectable to view video in full-screen or to view program listings related to the video displayed in media region 214 (e.g., to view listings for the channel that the video is displayed on).

In some embodiments, a connect option 228 may be provided, for example, that may be similar to option 128 of FIG. 1. Connect option 228 may link the user to a display screen containing recommended profiles or may cause an overlay to be displayed over video mosaic display 200. Alternatively or additionally, connect option 228 may cause the display of recommended partner profiles within one or more of regions 206, 208, 210, and 212. For example, in response to a user selection of connect option 228, a partner profile may be displayed in media region 214 and the provider of the partner profile may be displayed in text region 216.

The listings in display 200 are of different sizes (i.e., listing 206 is larger than listings 208, 210, and 212), but if desired, all the listings may be the same size. Listings may be of different sizes or graphically accentuated to indicate degrees of interest to the user or to emphasize certain content, as desired by the media provider or based on user preferences. Various systems and methods for graphically accentuating media listings are discussed in, for example, Yates, U.S. patent application Ser. No. 11/324,202, filed Dec. 29, 2005.

Users may access media content and/or the media guidance application (and associated display screens described above and below) from one or more of their user equipment devices. FIG. 3 shows a generalized embodiment of illustrative user equipment device 300. User equipment device 300 may receive media content and data via input/output (hereinafter "I/O") path 302. I/O path 302 may provide media content (e.g., broadcast programming, on-demand programming, Internet content, and other video or audio) and data to control circuitry 304, which includes processing circuitry 306 and storage 308. Control circuitry 304 may be used to send and receive commands, requests, and other suitable data using I/O path 302. I/O path 302 may connect control circuitry 304 (and specifically processing circuitry 306) to one or more communications paths (described below). I/O functions may be provided by one or more of these communications paths, but are shown as a single path in FIG. 3 to avoid overcomplicating the drawing.

Control circuitry 304 may be based on any suitable processing circuitry 306 such as processing circuitry based on one or more microprocessors, microcontrollers, digital signal processors, programmable logic devices, etc. In some embodiments, control circuitry 304 executes instructions for a media guidance application stored in memory (i.e., storage 308). In client-server based embodiments, control circuitry 304 may include communications circuitry suitable for communicating with a guidance application server or other networks or servers. Communications circuitry may include a cable modem, an integrated services digital network (ISDN) modem, a digital subscriber line (DSL) modem, a telephone modem, a wireless modem for communications with other equipment, a fiber-optic communications interface, a network interface (e.g., for an Ethernet network), and/or any other suitable interface. Such communications may involve the Internet or any other suitable communications networks or paths (which is described in more detail in connection with FIG. 4A). In addition, communications circuitry may include circuitry that enables peer-to-peer communication of user equipment devices, or communication of user equipment devices in locations remote from each other (described in more detail below).

Memory (e.g., random-access memory, read-only memory, or any other suitable memory), hard drives, optical drives, or any other suitable fixed or removable storage devices (e.g., DVD recorder, CD recorder, video cassette recorder, or other suitable recording device) may be provided as storage 308 that is part of control circuitry 304. Storage 308 may include one or more of the above types of storage devices. For example, user equipment device 300 may include a hard drive for a DVR (sometimes called a personal video recorder, or PVR) and a DVD recorder as a secondary storage device. Storage 308 may be used to store various types of media described herein and guidance application data, including program information, guidance application settings, user preferences or profile information, or other data used in operating the guidance application. Non-volatile memory may also be used (e.g., to launch a boot-up routine and other instructions) .

Control circuitry 304 may include video generating circuitry and tuning circuitry, such as one or more analog tuners, one or more MPEG-2 decoders or other digital decoding circuitry, high-definition tuners, or any other suitable tuning or video circuits or combinations of such circuits. Encoding circuitry (e.g., for converting over-the-air, analog, or digital signals to MPEG signals for storage) may also be provided. Control circuitry 304 may also include scaler circuitry for upconverting and downconverting media into the preferred output format of the user equipment 300. Circuitry 304 may also include digital-to-analog converter circuitry and analog-to-digital converter circuitry for converting between digital and analog signals. The tuning and encoding circuitry may be used by the user equipment to receive and to display, to play, or to record media content. The tuning and encoding circuitry may also be used to receive guidance data. The circuitry described herein, including for example, the tuning, video generating, encoding, decoding, scaler, and analog/digital circuitry, may be implemented using software running on one or more general purpose or specialized processors. Multiple tuners may be provided to handle simultaneous tuning functions (e.g., watch and record functions, picture-in-picture (PIP) functions, multiple-tuner recording, etc.). If storage 308 is provided as a separate device from user equipment 300, the tuning and encoding circuitry (including multiple tuners) may be associated with storage 308.

A user may control the control circuitry 304 using user input interface 310. User input interface 310 may be any suitable user interface, such as a remote control, mouse, trackball, keypad, keyboard, touch screen, touch pad, stylus input, joystick, voice recognition interface, or other user input interfaces. Display 312 may be provided as a stand-alone device or integrated with other elements of user equipment device 300. Display 312 may be one or more of a monitor, a television, a liquid crystal display (LCD) for a mobile device, or any other suitable equipment for displaying visual images. In some embodiments, display 312 may be HDTV-capable. Speakers 314 may be provided as integrated with other elements of user equipment device 300 or may be stand-alone units. The audio component of videos and other media content displayed on display 312 may be played through speakers 314. In some embodiments, the audio may be distributed to a receiver (not shown), which processes and outputs the audio via speakers 314.

The guidance application may be implemented using any suitable architecture. For example, it may be a stand-alone application wholly implemented on user equipment device 300. In such an approach, instructions of the application are stored locally, and data for use by the application is downloaded on a periodic basis (e.g., from the VBI of a television channel, from an out-of-band feed, or using another suitable approach). In another embodiment, the media guidance application is a client-server based application. Data for use by a thick or thin client implemented on user equipment device 300 is retrieved on-demand by issuing requests to a server remote to the user equipment device 300. In one example of a client-server based guidance application, control circuitry 304 runs a web browser that interprets web pages provided by a remote server.

In yet other embodiments, the media guidance application is downloaded and interpreted or otherwise run by an interpreter or virtual machine (run by control circuitry 304). In some embodiments, the guidance application may be encoded in the ETV Binary Interchange Format (EBIF), received by control circuitry 304 as part of a suitable feed, and interpreted by a user agent running on control circuitry 304. For example, the guidance application may be a EBIF widget. In other embodiments, the guidance application may be defined by a series of JAVA-based files that are received and run by a local virtual machine or other suitable middleware executed by control circuitry 304. In some of such embodiments (e.g., those employing MPEG-2 or other digital media encoding schemes), the guidance application may be, for example, encoded and transmitted in an MPEG-2 object carousel with the MPEG audio and video packets of a program.

In some embodiments, a user may receive content, or information relating to content, using applications called "widgets." Widgets are applications separate from the primary interactive media guidance application of the user's main content service provider, and may often access information through the Internet. Widgets, advantageously, are typically smaller than full-featured media guidance applications and are thus capable of running not only on devices such as personal computers or set-top boxes, but also on less computationally powerful devices such as a user's television. As one illustrative example, a profile matching widget may provide a user with access to recommended partner profiles through the user's television. According to some embodiments of the invention, information may be shared between multiple widgets operating on the same user equipment and between widgets and the interactive media guidance application. Information corresponding to a user may be received from a first widget operating on the user equipment (or from the guidance application) and made accessible to a second widget operating on that user equipment. For example, information indicating that the user is interested in a particular actor may be received from a guidance widget and shared with the interactive media guidance application. The received information may then be used to update the user's media guidance profile and customize the manner in which the second widget provides content to the user. Continuing with the matching widget example, updated partner profiles based on the information monitored through a first widget may be retrieved and presented to the user, for example, using the profile matching widget.

One or more widgets such as widget 316 may be implemented on user equipment device 300 in any suitable manner (e.g., using any of the architectures described above in connection with the guidance application). For example, if user equipment device 300 includes a television and a set-top box, one or more widgets may be implemented in the set-top box, in the television, or both. Widgets implemented at least partially on user equipment device 300 may allow the user to interact with web services via the Internet while watching television. These widgets may provide the user with access to television program listings, news, financial data, pictures, social networking applications, partner profile-matching applications, movie rental services, consumer products available for purchase, or any other suitable content or combinations thereof.

Referring now to FIG. 4A, illustrative system 400 is shown for providing media guidance to different types of user equipment devices in accordance with an embodiment of the present invention. User equipment device 300 of FIG. 3 may be implemented in system 400 of FIG. 4A as user television equipment 402, user computer equipment 404, wireless user communications device 406, or any other type of user equipment suitable for accessing media (e.g., a non-portable gaming machine). For simplicity, these devices may be referred to herein collectively as user equipment or user equipment devices. User equipment devices, on which a media guidance application is implemented, may function as a standalone device or may be part of a network of devices. Various network configurations of devices may be implemented and are discussed in more detail below.

User television equipment 402 may include a set-top box, an integrated receiver decoder (IRD) for handling satellite television, a television set, a digital storage device, a DVD recorder, a video-cassette recorder (VCR), a local media server, or other user television equipment. One or more of these devices may be integrated to be a single device, if desired. User computer equipment 404 may include a PC, a laptop, a tablet, a WebTV box, a personal computer television (PC/TV), a PC media server, a PC media center, or other user computer equipment. WEBTV (now known as MSN TV) is a trademark owned by Microsoft Corp. Wireless user communications device 406 may include PDAs, a mobile telephone, a portable video player, a portable music player, a portable gaming machine, or other wireless devices.

It should be noted that with the advent of television tuner cards for PC's, WebTV, and the integration of video into other user equipment devices, the lines have become blurred when trying to classify a device as one of the above devices. In fact, each of user television equipment 402, user computer equipment 404, and wireless user communications device 406 may utilize at least some of the system features described above in connection with FIG. 3 and, as a result, include flexibility with respect to the type of media content available on the device. For example, user television equipment 402 may be Internet-enabled allowing for access to Internet content, while user computer equipment 404 may include a tuner allowing for access to television programming. The media guidance application may also have the same layout on the various different types of user equipment or may be tailored to the display capabilities of the user equipment. For example, on user computer equipment, the guidance application may be provided as (or within) a web site accessed by a web browser. In another example, the guidance application may be scaled down for wireless user communications devices.

In system 400, there is typically more than one of each type of user equipment device but only one of each is shown in FIG. 4A to avoid overcomplicating the drawing. In addition, each user may utilize more than one type of user equipment device (e.g., a user may have a television set and a computer) and also more than one of each type of user equipment device (e.g., a user may have a PDA and a mobile telephone and/or multiple television sets).

The user may also set various settings to control and/or maintain consistent media guidance application settings across in-home devices and remote devices. Media guidance settings include those described herein, as well as channel and program favorites, programming preferences that the guidance application utilizes to make programming recommendations, display preferences, and other desirable guidance settings. For example, if a user sets a channel as a favorite on, for example, the web site www.tvguide.com on their personal computer at their office, the same channel may appear as a favorite on the user's in-home devices (e.g., user television equipment and user computer equipment) as well as the user's mobile devices, if desired. As another example, a user may specify using one device (e.g., a portable device or one mounted in the user's automobile) that a program is to be recorded on another of the user's devices (e.g., the user's home device). Therefore, changes made on one user equipment device may change the guidance experience on another user equipment device, regardless of whether they are the same or a different type of user equipment device. In addition, the changes made may be based on settings input by a user, as well as user activity monitored by the guidance application.

The user equipment devices may be coupled to communications network 414. Namely, user television equipment 402, user computer equipment 404, and wireless user communications device 406 are coupled to communications network 414 via communications paths 408, 410, and 412, respectively. Communications network 414 may be one or more networks including the Internet, a mobile phone network, mobile device (e.g., Blackberry) network, cable network, public switched telephone network, a satellite network (e.g., a satellite television network or other satellite communications network), or other types of communications network or combinations of communications networks. BLACKBERRY is a trademark owned by Research In Motion Limited Corp. Paths 408, 410, and 412 may separately or together include one or more communications paths, such as, a satellite path, a fiber-optic path, a cable path, a path that supports Internet communications (e.g., IPTV), free-space connections (e.g., for broadcast or other wireless signals), or any other suitable wired or wireless communications path or combination of such paths. Path 412 is drawn with dotted lines to indicate that in the exemplary embodiment shown in FIG. 4A it is a wireless path and paths 408 and 410 are drawn as solid lines to indicate they are wired paths (although these paths may be wireless paths, if desired). Communications with the user equipment devices may be provided by one or more of these communications paths, but are shown as a single path in FIG. 4A to avoid overcomplicating the drawing.

Although communications paths are not drawn between user equipment devices, these devices may communicate directly with each other via communication paths, such as those described above in connection with paths 408, 410, and 412, as well other short-range point-to-point communication paths, such as USB cables, IEEE 1394 cables, wireless paths (e.g., Bluetooth, infrared, IEEE 802-11x, etc.), or other short-range communication via wired or wireless paths. BLUETOOTH is a trademark owned by Bluetooth SIG, INC. The user equipment devices may also communicate with each other directly through an indirect path via communications network 414.

System 400 includes media content source 416, media guidance data source 418, and partner profile data source 424 coupled to communications network 414 via communication paths 420, 422, and 426, respectively. Paths 420, 422, and 426 may include any of the communication paths described above in connection with paths 408, 410, and 412. Communications with the media content source 416, media guidance data source 418, and partner profile data source 424 may be exchanged over one or more communications paths, but are shown as a single path in FIG. 4A to avoid overcomplicating the drawing. In addition, there may be more than one of each of media content source 416, media guidance data source 418, and partner profile data source 424, but only one of each is shown in FIG. 4A to avoid overcomplicating the drawing. (The different types of each of these sources are discussed below.) If desired, media content source 416, media guidance data source 418, and partner profile data source 424 may be integrated as one source device. Although communications between sources 416, 418, and 424 with user equipment devices 402, 404, and 406 are shown as through communications network 414, in some embodiments, sources 416, 418, and 424 may communicate directly with user equipment devices 402, 404, and 406 via communication paths (not shown) such as those described above in connection with paths 408, 410, and 412.

Media content source 416 may include one or more types of media distribution equipment including a television distribution facility, cable system headend, satellite distribution facility, programming sources (e.g., television broadcasters, such as NBC, ABC, HBO, etc.), intermediate distribution facilities and/or servers, Internet providers, on-demand media servers, and other media content providers. NBC is a trademark owned by the National Broadcasting Company, Inc., ABC is a trademark owned by the ABC, INC., and HBO is a trademark owned by the Home Box Office, Inc. Media content source 416 may be the originator of media content (e.g., a television broadcaster, a Webcast provider, etc.) or may not be the originator of media content (e.g., an on-demand media content provider, an Internet provider of video content of broadcast programs for downloading, etc.). Media content source 416 may include cable sources, satellite providers, on-demand providers, Internet providers, or other providers of media content. Media content source 416 may also include a remote media server used to store different types of media content (including video content selected by a user), in a location remote from any of the user equipment devices. Systems and methods for remote storage of media content, and providing remotely stored media content to user equipment are discussed in greater detail in connection with Ellis et al., U.S. Patent Application Publication No. 2003/0149988 A1, published Aug. 7, 2003.

Media guidance data source 418 may provide media guidance data, such as media listings, media-related information (e.g., broadcast times, broadcast channels, media titles, media descriptions, ratings information
(e.g., parental control ratings, critic's ratings, etc.), genre or category information, actor information, logo data for broadcasters' or providers' logos, etc.), media format (e.g., standard definition, high definition, etc.), advertisement information (e.g., text, images, media clips, etc.), on-demand information, and any other type of guidance data that is helpful for a user to navigate among and locate desired media selections.

Media guidance data source 418 may additionally provide advertisement information (e.g., text, images, media clips, etc.) to the user equipment devices. The advertisement information may include any advertisements used by the media guidance application to provide advertisements to a user. The advertising information provided to the user devices may have originated from any suitable source, which may or may not be media guidance data source 418. In some embodiments, the advertising information may have originated from various different advertisers or program sponsors, and may have originated from media content source 416.

Media guidance application data, including the advertisement information, may be provided to the user equipment devices using any suitable approach or combination of approaches. In some embodiments, the guidance application may be a stand-alone interactive television program guide that receives program guide data via a data feed (e.g., a continuous feed, trickle feed, or data in the vertical blanking interval of a channel).
Program schedule data and other guidance data, such as advertising information, may be provided to the user equipment on a television channel sideband, in the vertical blanking interval of a television channel, using an in-band digital signal, using an out-of-band digital signal, or by any other suitable data transmission technique. Program schedule data and other guidance data may be provided to user equipment on multiple analog or digital television channels. Program schedule data and other guidance data may be provided to the user equipment with any suitable frequency
(e.g., continuously, daily, a user-specified period of time, a system-specified period of time, in response to a request from user equipment, etc.). In some approaches, guidance data from media guidance data source 418 may be provided to users' equipment using a client-server approach. For example, a guidance application client residing on the user's equipment may initiate sessions with source 418 to obtain guidance data when needed. Media guidance data source 418 may provide user equipment devices 402, 404, and 406 the media guidance application itself or software updates for the media guidance application.

Media guidance applications may be, for example, stand-alone applications implemented on user equipment devices. In other embodiments, media guidance applications may be client-server applications where only the client resides on the user equipment device. For example, media guidance applications may be implemented partially as a client application on control circuitry 304 of user equipment device 300 and partially on a remote server as a server application (e.g., media guidance data source 418). The guidance application displays may be generated by the media guidance data source 418 and transmitted to the user equipment devices. The media guidance data source 418 may also transmit data for storage on the user equipment, which then generates the guidance application displays based on instructions processed by control circuitry.

Partner profile data source 424 may provide data of any of the types that may be provided by media content source 416 and media guidance data source 418, or any other suitable data. Partner profile data source 424 may include any equipment that may be included in media content source 416, for example, or any other suitable equipment. In accordance with some embodiments of the invention, partner profile data source 424 may provide data used in various profile-matching applications that may run at least partially on user equipment 300, or remotely, including applications that allow a user to select from a set of recommended, or matched, partner profiles in order to initiate communication with the individual associated with the selected partner profile. The data provided by partner profile data source 424 may be created and updated in any suitable way. For example, partner profile data source 424 may exchange information with providers of partner profiles including, but not limited to, matching services, social-networking services, professional networking services, blogging or micro-blogging services, or any other suitable services that may have partner profiles; with user equipment 402, 404, or 406; or with any other entities or any suitable combination thereof. Although only one partner profile data source 424 is shown, it will be understood that any suitable number of partner profile data sources may be provided.

Media guidance system 400 is intended to illustrate a number of approaches, or network configurations, by which user equipment devices and sources of media content and guidance data may communicate with each other for the purpose of accessing media and providing media guidance. The present invention may be applied in any one or a subset of these approaches, or in a system employing other approaches for delivering media and providing media guidance. The following three approaches provide specific illustrations of the generalized example of FIG. 4A.

In one approach, user equipment devices may communicate with each other within a home network. User equipment devices may communicate with each other directly via short-range point-to-point communication schemes described above, via indirect paths through a hub or other similar device provided on a home network, or via communications network 414. Each of the multiple individuals in a single home may operate different user equipment devices on the home network. As a result, it may be desirable for various media guidance information or settings to be communicated between the different user equipment devices. For example, it may be desirable for users to maintain consistent media guidance application settings on different user equipment devices within a home network, as described in greater detail in Ellis et al., U.S. Patent Application Publication No. 2005/0251827 A1, published November 10, 2005. Different types of user equipment devices in a home network may also communicate with each other to transmit media content. For example, a user may transmit media content from user computer equipment to television equipment, a smart phone, a portable video player, and/or portable music player.

In a second approach, users may have multiple types of user equipment by which they access media content and obtain media guidance. For example, some users may have home networks that are accessed by in-home and mobile devices. Users may control in-home devices via a media guidance application implemented on a remote device. For example, users may access an online media guidance application on a website via a personal computer at their office, or a mobile device such as a PDA or web-enabled mobile telephone. The user may set various settings (e.g., recordings, reminders, or other settings) on the online guidance application to control the user's in-home equipment. The online guide may control the user's equipment directly, or by communicating with a media guidance application on the user's in-home equipment. Various systems and methods for user equipment devices communicating, where the user equipment devices are in locations remote from each other, is discussed in, for example, Ellis et al., U.S. Patent Application Publication No. 2005/0028208 A1, published Feb. 3, 2005.

In a third approach, users of user equipment devices inside and outside a home may communicate directly with media content source 416 to access media content. Specifically, within a home, users of user television equipment 402 and user computer equipment 404 may access the media guidance application to navigate among and locate desirable media content. Users may also access the media guidance application outside of the home using wireless user communications devices 406 to navigate among and locate desirable media content. Users of user equipment devices inside and outside a home may also communicate directly with any other suitable data source (e.g., data sources 418 and 424) to access media guidance information and partner profile information, for example. This information may be accessed each time media content is accessed, or in advance, for example.

It will be appreciated that while the discussion of media content has focused on video content, the principles of media guidance may be applied to other types of media content, such as music, images, or any other suitable media content.

FIG. 4B shows an illustrative recommendation system according to some embodiments of the present invention. Recommendation system 450 includes recommendation module 10 for generating profile matches between a user's media guidance profile and the partner profiles 4 received, for example, from partner profile data source 424. Recommendation module 10 may be implemented within any device capable of accessing a user's media guidance profile or it may be implemented at a server (local or remote) capable of receiving and fulfilling profile access requests from other devices. Profile access requests are described in further detail below.

In some embodiments, recommendation system 450 may be implemented partly on a local device and partly on a remote server. For example, a user may select an option such as option 128 of FIG. 1 to view recommended partner profiles through a user interface implemented on a mobile device. Before displaying the recommended partner profiles, however, a part of recommendation module 10 running on the mobile device may send a profile access request 3 to another part of recommendation module 10 running on a server in order to access the user's media guidance profile, which may be stored in media guidance profile database 16. In some embodiments, recommendation module 10 may determine whether any access restrictions apply and either grant or deny the request.

Recommendation module 10 may identify a subset of partner profiles from received partner profiles 4 using any suitable data available. In some approaches, the recommendation module may compare at least one attribute from a user's media guidance profile with an attribute from the partner profiles to generate a set of recommended partner profiles, where the set includes one or more partner profiles. The attributes that are compared may be similar attributes or attributes that may not be similar but may be correlated to a user's potential interest in the partner profile. In some embodiments, the recommendation module 10 may determine this correlation by monitoring the user's selections of recommended partner profiles, such as, for example, selections to view extended profiles or selections to bookmark particular partner profiles. Comparing media guidance profiles and partner profiles is discussed in more detail below in connection with the illustrative embodiments and processes depicted in FIGS. 5-9.

As discussed above, the user's media guidance profile may be automatically generated by the media guidance application, for example, by monitoring a user's interactions with the media guidance application. The media guidance profile may be generated and/or stored, for example, at media guidance profile database 16, which may be accessed locally in storage 308 of FIG. 3 or remotely at media guidance data source 418 of FIG. 4A. In some embodiments, the media guidance applications via recommendation module 10 may extract identifying information from media content 2 to generate the media guidance profile. For example, media content 2 may be a television program signal with identifying information stored in the vertical blanking interval (VBI) of the signal or within metadata associated with the media content. In yet another approach, recommendation module 10 may retrieve, extract, or be provided with identifying information from a local data store or external source. For example, media content 2 may be identified from program guide data 5 (e.g., stored in a program listings database) or from additional information 8 (e.g., a website or other internet-based information source). In some cases, media content 2 is identified using a combination of all or some of the aforementioned approaches. Identifying information may include one or more of a title, an artist, an album, a rating, a genre, a theme, a category, a keyword, a metadata term, a channel, an owner, a link, a unique identification code, a graphic, cover art, a trailer, an audio or video clip, a sponsor, etc.

With continued reference to FIG. 4B, recommendation module 10 may receive profile access request 3 and identify recommended partner profiles using information included in media guidance profile database 16 and generated from media content 2, guide data 5, additional information 8, or any other suitable information, for example. The media guidance profile may include other information on the user derived from the user device. In some circumstances, recommendation module 10 queries the initiating device user information. In other circumstances, user information can be retrieved from a data store that maintains a log of connected devices and/or users (e.g., a log maintained at a local or remote server). Device and/or user information may also be stored in the user's media guidance profile on the device or at a remote location.

In some embodiments, partner profiles received from partner profile data source 424 and stored at partner profile database 17 may be removed or replaced. Partner profile filter unit 14, for example, may be configured to remove or replace partner profiles based on storage time of the partner profiles or any other suitable criteria for managing the resources of the user's equipment such as available storage space.

In some embodiments, profile access requests and/or information related to accessed recommended partner profiles may be recorded and maintained for later review. Log module 20, for example, may interface with recommendation module 10 to record and maintain information provided by, or retrieved from, the module and its accompanying data stores. Log module 20 may have access to any suitable information, including media content 2, profile access requests 3, partner profiles 4, guide data 5, the user's media guidance profile within data store 16, partner profiles stored at data store 17, and additional information 8. Log module 20 may also have access to the results of any recommendations made by recommendation module 10, e.g., any recommended partner profiles determined to be relevant to the user's media guidance profile. Log module 20 may store any or all of the aforementioned information, or a record of the information, in log database 24. For example, log module 20 may generate and store log entries associated with profile access requests and/or recommended partner profiles in database 24. The contents of log database 24 may be accessed by match review application 22 and presented to a user, as will be described in further detail below.

Match review application 22 may be accessible from any suitable device or application, and may be accessible through a website. For example, a user may select an icon (e.g., option 125 of FIG. 1) within a media guidance application to access the match review application 22. In some embodiments, only the user for which the matches have been made has access to match review application 22. As such, a password or another form of identification may be required to gain access to match review application. In other embodiments, restricted users have access to match review application 22, but may be presented with only a subset of information and/or prevented from modifying any settings. Match review application 22 may provide a user interface for reviewing information stored in log database 24, information gathered from recommendation module 10, and/or profile information stored in data store 16.

It is noted that any or all components within recommendation system 450--including recommendation module 10 and log module 20--may be implemented as processing circuitry and/or as software implemented using processing circuitry (e.g., as computer-readable instructions encoded on a computer-readable medium and executed using a processor). This processing circuitry may be incorporated within user equipment (e.g., control circuitry 304 of user equipment device 300 of FIG. 3) and/or within a data source (e.g., a local or remote server). In some embodiments, the components of recommendation system 450 may be implemented across a number of user equipment devices (e.g., devices 402, 404, and 406) and/or data sources (e.g., data sources 416, 418, and 424 of FIG. 4A). In particular, recommendation module 10 may be implemented in part or in whole on a number of devices and/or data sources. For example, media detection unit 12 and profile filter unit 14 may be implemented on all user equipment devices used to access matching profiles. As another example, media guidance profile database 16 may be located at a data source accessible to all the user equipment devices. Similarly, log module 20 may be implemented in part or in whole on a number of devices and/or data sources. For example, review application 22 may be implemented using processing circuitry on a user equipment device (e.g., user television equipment), and log database 24 may be located at a data source accessible to all the user equipment devices (e.g., via the Internet). When the components of recommendation system 450 are distributed on a number of devices and/or data sources, they may communicate with each other directly and/or through communications network 414, using any suitable protocol. For example, data may be transmitted between devices using the hypertext transfer protocol ("HTTP").

FIG. 5 shows an illustrative display screen 500 according to some embodiments of the present invention. As shown in FIG. 5, for example, display screen 500 may include recommended matching partner profile display region 501 that may include a set of recommended partner profiles that have been matched with the user's media guidance profile. The partner profiles may be received, for example, from partner profile data source 424 of FIG. 4A. Recommended partner profile display region 501 may be displayed as an overlay over any suitable display screen of the media guidance application including, for example, various guidance screens (e.g., display screens 100 and 200 of FIGS. 1 and 2), program display screens (including broadcast and/or streaming-media displays), interactive gaming display screens, or any other suitable display screen. In some embodiments, region 501 may alternatively, or additionally, be displayed as a dedicated screen that may be accessible in any suitable way, such as via navigation of menus and/or options provided in an interactive media guidance application, by pressing a dedicated button in user input interface 310 of FIG. 3, any other suitable technique, or any combination thereof.

Region 501 may include a set of recommended partner profiles 591-594. The recommended partner profiles 591-594 may be matched to the user of the media guidance application, for example, based on the user's media guidance profile. Each partner profile may include information or attributes about the respective individual associated with the partner profile. For example, recommended partner profile 591 may include personal information region 502 and relevant interests region 504. Personal information region 502 may include the age and current location of the particular individual (e.g., janedoe_1). In some embodiments, the information provided in recommended partner profile 591 may be a subset of the information contained in the complete or full partner profile (e.g., partner profile 591 may be a "limited" or "teaser" partner profile). For example, the complete partner profile may include additional entries under the attribute "personal information" that are not displayed in personal information region 502 of partner profile 591. As another example, other attributes and/or descriptors relating to the individual such as "likes," "interests," "looking for," "about me," "appearance," or any other attributes, may be included in the full partner profile but may not be displayed in partner profile 591. The individual associated with a partner profile may limit the amount of information that may be displayed in recommended partner profile 591, for example, by adjusting various privacy settings through the provider of the partner profile (e.g., "PROVIDER 1"). The individual may choose to limit the information that is displayed in partner profile 591, for example, until the user initiates communication by selecting partner profile 591.

Relevant interests region 504 may include the attributes of recommended partner profile 591 that were relevant to the user's media guidance profile, for example, in selecting partner profile 591 to be among the set of recommended partner profiles. For example, as shown in FIG. 5, partner profile 591 indicates that janedoe_1's relevant interests include Soccer and the Weekly Show. In some embodiments, information icons 506 may be provided, for example, so that a user may see which attributes from his or her own media guidance profile were used to make the match. This may allow a user to provide feedback with the media guidance application regarding the strength of the recommendation. For example, the user may have watched every game of the World Cup, and this information may have been recorded by the media guidance application in creating the user's media guidance profile. As another example, the user may not have watched any games of the World Cup, but the user may have viewed numerous commercials for the World Cup (e.g., while watching a sports network), or selected an interactive advertisement for the World Cup (e.g., advertisement 124 of FIG. 1), and this information may have been recorded by the media guidance application. Recommended partner profile 591 may have been matched with the user based at least in part on both parties' interest in soccer. Therefore, if the user is interested in partner profile 591, the user may provide positive feedback regarding the recommended match via information icons 506.

In some embodiments, the interactive media guidance application may automatically determine the strength of the recommended matches by monitoring which recommended partner profiles were selected by the user. For example, the media guidance application may review user selections of recommended partner profiles and the attributes used to compare them, and determine the relative strength of the matches and/or the positive and negative correlations between the compared attributes.

In some embodiments, comparing "similar" attributes between the user and a partner profile (e.g., mutual interest in a particular media program or sporting event) may not necessarily indicate a relatively strong match. For example, as discussed above, the user may be a fan of the World Cup by either watching the games or selecting interactive advertisements relating to the World Cup. However, the user may not be interested in meeting other soccer fans.
Therefore, the user may provide negative feedback regarding the match, and the media guidance application may use this information to determine future recommended matching partner profiles.

In some embodiments, a bookmarking feature may be provided for the partner profiles. For example, bookmark icons 540 may be provided for each respective partner profile 591-594. The bookmarking feature may allow a user to "save" a particular partner profile, for example, for later viewing. For example, when a user determines that he or she would like to bookmark a particular profile, the user may select the bookmark icon as shown by selected bookmark icon 542. In some embodiments, the partner profiles that have been bookmarked may be later displayed together on a display screen with the bookmarked partner profiles arranged in a manner similar to that of FIG. 5. As discussed above, profile access requests and/or information related to accessed recommended partner profiles may be recorded and maintained for later review, for example, by log module 20 of FIG. 4B. This may include bookmark requests and the profiles thereby associated with the bookmarks. Furthermore, recommendation module 10 may use information associated with bookmarked profiles to refine already-matched partner profiles or develop future profile matches.

Recommended partner profile 591 may include an image 512 of the individual associated with the partner profile (e.g., janedoe_1), and a logo 514 for the provider of the partner profile. In some embodiments, the media guidance application may select partner profiles from a group of trusted providers. In some embodiments, partner profiles may be recommended only when an image is provided along with the partner profile.

In some embodiments, additional options 516, 518, 520, and 522 may be provided with recommended partner profile 591. Option 516 may allow the user of the media guidance application to send a message (e.g., by e-mail) to the individual associated with partner profile 591. The message may be sent directly to the individual's personal messaging account or may be delivered to the individual through the provider, for example, in order to maintain the individual's privacy and/or anonymity. Option 518 may allow the user of the media guidance application to view partner profiles that may be linked to partner profile 591 via the provider's service. For example, janedoe_1 may have friends who use the same provider's service and are linked to janedoe_1's partner profile.

In some embodiments, the user of the media guidance application may have one or more partner profiles. If the user has a partner profile provided by the same service provider, option 518 may allow the user to see whether he or she has any friends in common with janedoe_1. For example, the media guidance application may determine that the user has one or more partner profiles and may incorporate all or part of those partner profiles into the media guidance profile. Alternatively or additionally, the information generated by the media guidance application in creating the media guidance profile may be provided to the service provider to complement, or synchronize, the user's partner profile with the user's media guidance profile. In this way, the media guidance application may allow a user to manage multiple profiles (e.g., the media guidance profile and a partner profile) across any platform and/or service provider. In some embodiments, a client-server system may be used to store profile data, whether from the user's media guidance profile or the user's partner profile, across different platforms and service providers. For example, the user may have a "master" profile that may be stored at a remote server (e.g., media guidance data source 418 of FIG. 4A), and the user's multiple profiles may then be synchronized and/or updated regardless of whether the user interacts with the media guidance application or updates the partner profile through the partner profile's service provider. It will be understood that any other suitable application or provider that may have data that is relevant to a user's profile may be monitored by the media guidance application in managing the user's master profile.

As previously discussed, the provider or providers of the partner profiles (e.g., recommended partner profiles 591-594) may be a matching service, a social-networking service, a professional networking service, a blogging or micro-blogging service, or any other suitable service. Often times, the user of the media guidance application and the individual associated with recommended partner profile 591 may have accounts at one or more of these services. Therefore, in some embodiments, option 520 may allow the user to see other services that may be linked to partner profile 591, including any of the services mentioned above, or any other services. For example, janedoe_1 may have a first partner profile with a first provider (a matching service) and a second partner profile with a second provider (a social-networking service). Recommended partner profile 591 may have been provided to the user through the first provider. However, the user may be able to view janedoe_1's second partner profile by selecting option 520.

Option 522 may allow the user of the media guidance application to learn more about the provider of recommended partner profile 591. For example, option 522 may provide access to Frequently Asked Questions, terms of use for joining the provider's service, privacy policies of the service, any other suitable information, or any combination thereof.

It will be understood that the options and layouts depicted in FIG. 5 are merely illustrative, and other options and layouts may be provided. For example, in some embodiments additional options may be provided that may or may not be provider-specific. Further, in some embodiments, fewer options or no options may be provided. For example, recommended partner profiles 592-594 do not include options 516, 518, 520, and 522.

Advertisements may be displayed with recommended partner profiles 591-594. For example, advertisement 510 may be displayed in recommended partner profile 591. Advertisement 510 may be for products or services related or unrelated to the content displayed in partner profile 591, recommended matching partner profile display region 501, or display screen 500, or any other suitable display screen, for example, if region 501 is displayed as an overlay over another display screen of the media guidance application. Advertisement 510 may be selectable and may provide information about media content, provide information about a product or service, enable purchasing of media content, a product, or a service, provide media content related to the advertisement, or any other suitable content. Advertisement 510 may be targeted based on a user's media guidance profile and/or preferences, monitored user activity, the type of display provided, any other suitable targeted advertisement technique, or combinations thereof. Advertisement 510 may an image, or text, or both, and may be refreshed and/or swapped with another advertisement at any suitable interval or may be refreshed/swapped in response to a user selection of advertisement 510, partner profile 591, or any other suitable selectable icon or display, or any combination thereof.

Although only four recommended partner profiles are shown in FIG. 5 (e.g., recommended partner profiles 591-594), it will be understood that any suitable number of recommended partner profiles may be displayed in any suitable media guidance application display screen. For example, fewer recommended partner profiles may displayed where a user is utilizing a media guidance application on a platform such as a mobile device, or any other device that may have a relatively limited display space. In some embodiments, relatively more partner profiles may be displayed, for example, in platforms that may have relatively more display space. In some embodiments, the relative size of the recommended partner profiles may be adjusted in order to provide any suitable number of partner profiles within a display. In still further embodiments, the relative size of the partner profiles may correspond to the relative strength of the match. For example, if partner profile 591 is a stronger match than partner profile 592, then partner profile 591 may occupy more space within the display.

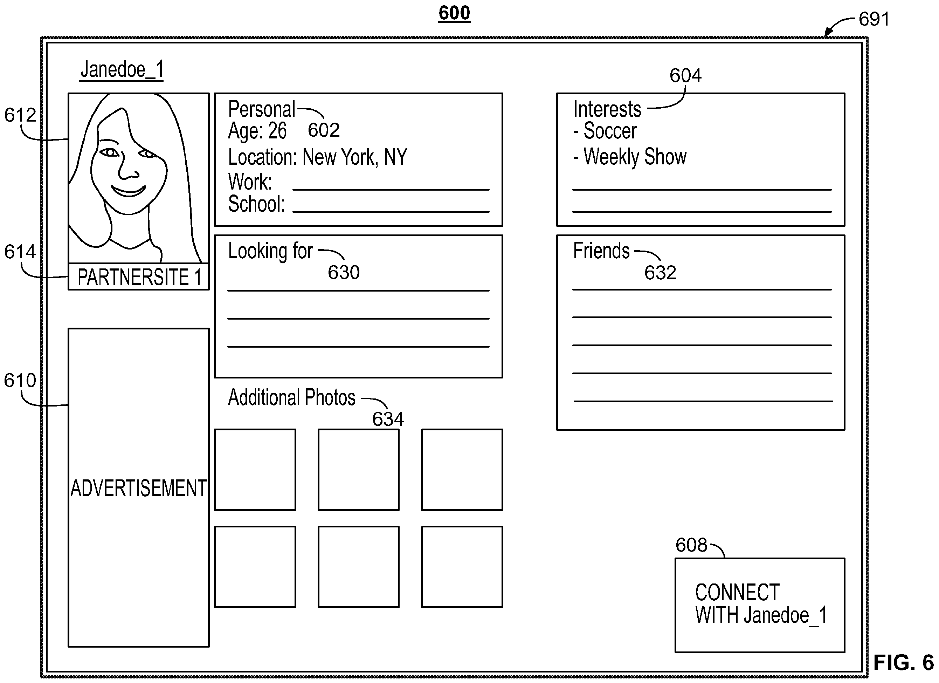

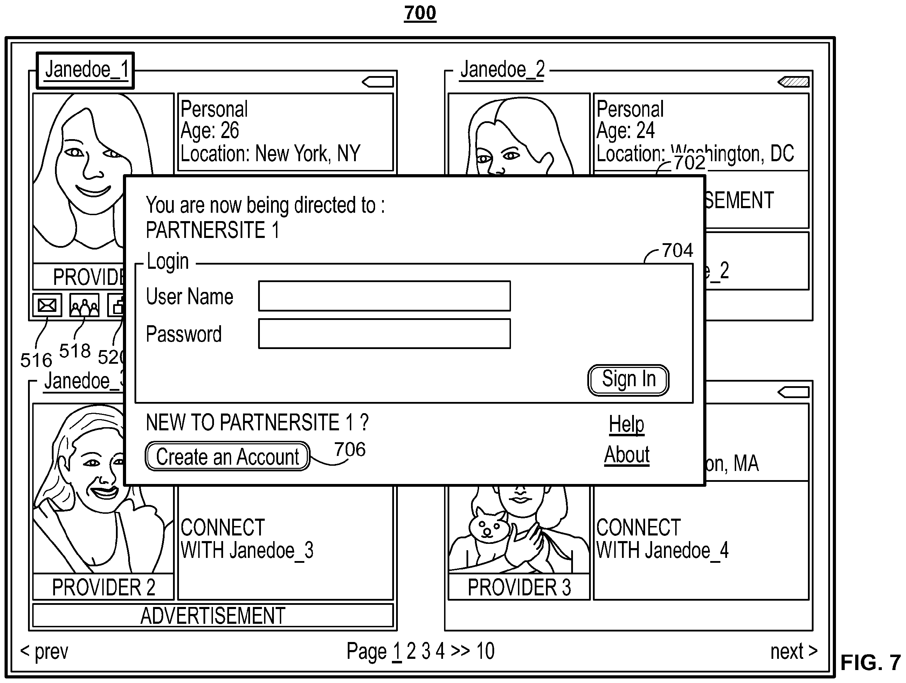

A user of the media guidance application may select any of recommended partner profiles 591-594, for example, by appropriately positioning highlight region 524 over the partner profile and pressing an "OK," "Enter," or "Select" button in user input interface 310 of FIG 3; selecting an option from within the partner profile (e.g., option 510 of partner profile 591); or any other suitable technique. In some embodiments, selecting one of recommended partner profiles 591-594 may provide a user with more information about the individual associated with the selected partner profile (FIG. 6), or may provide the user with a request to register with the provider of the selected partner profile prior to viewing additional information and/or communicating with the individual associated with the partner profile (FIG. 7). In some embodiments, selection of a recommended partner profile as described above may automatically bookmark that profile for later viewing by the user.

FIG. 6 shows an illustrative display screen 600 according to some embodiments of the present invention. Display screen 600 may be accessed, for example, in response to a user selection of recommended partner profile 591 from FIG. 5. As discussed above in connection with display screen 500 of FIG. 5, display screen 600 of FIG. 6 may be displayed as an overlay over any suitable display screen of the media guidance application including, for example, various guidance screens (e.g., display screens 100 and 200 of FIGS. 1 and 2), program display screens (including broadcast and/or streaming-media displays), interactive gaming display screens, or any other suitable display screen. In some embodiments, display screen 600 may alternatively, or additionally, be displayed as a dedicated screen that may be accessible in any suitable way, such as via navigation of menus and/or options provided in an interactive media guidance application, by pressing a dedicated button in user input interface 310 of FIG. 3, any other suitable technique, or any combination thereof.

As shown in FIG. 6, for example, additional information or attributes about the respective individual associated with partner profile 591 (e.g., janedoe_1) may be displayed in extended partner profile 691. For example, extended partner profile 691 may include personal information region 602, interests region 604, looking for region 630, friends region 632, and additional photos region 634, and advertisement region 610. Similar to recommended partner profile 591, extended partner profile 691 may include an image 612 of the individual associated with the partner profile, and a logo 514 for the provider of the partner profile. It will be understood that any other suitable information may be included in extended partner profile 691. For example, as discussed above, other attributes and/or descriptors relating to the individual may include "likes," "about me," "appearance," or any other suitable attributes.

In some embodiments, extended partner profile 691 may include substantially all of the information from the complete or full partner profile. In some embodiments, extended partner profile 691 may still be a subset of the information contained in the complete or full partner profile, although the subset of information in extended partner profile 691 may include more information than the subset of information in recommended partner profile 591.

In some embodiments, extended partner profile 691 may not be displayed until the individual associated with the partner profile grants the user permission to view the extended partner profile. For example, in response to a user selection of recommended partner profile 591, a request may be sent to janedoe_1 seeking permission to display extended partner profile 691. After a predetermined amount of time has passed, the request may expire and the user may need to resubmit the request in order to view extended partner profile 691.

FIG. 7 shows an illustrative display screen 700 that includes overlay 702 according to some embodiments of the present invention. Overlay 702 may be displayed, for example, in response to a user selection of recommended partner profile 591 from FIG. 5 or extended partner profile 691 from FIG. 6. Overlay 702 may include an option for a user of the media guidance application to register (option 706) with the provider of recommended partner profile 591 in order to view more information about the individual associated with partner profile 591 or to communicate with the individual, for example. In some embodiments, a user may need to register with the provider before the user is able to correspond with the individual (e.g., janedoe_1). This may allow janedoe_1 to remain anonymous, for example, by routing any communication from the user through the provider's service. If the user already has an account with the provider, the user may login to his or her account through option 704 of overlay 702. It will be understood that, in some embodiments, a user of the media guidance application may be able to correspond directly with the individual associated with partner profile 591, or view the complete or full partner profile, for example, without having to register with the provider and/or log in to the provider's service.

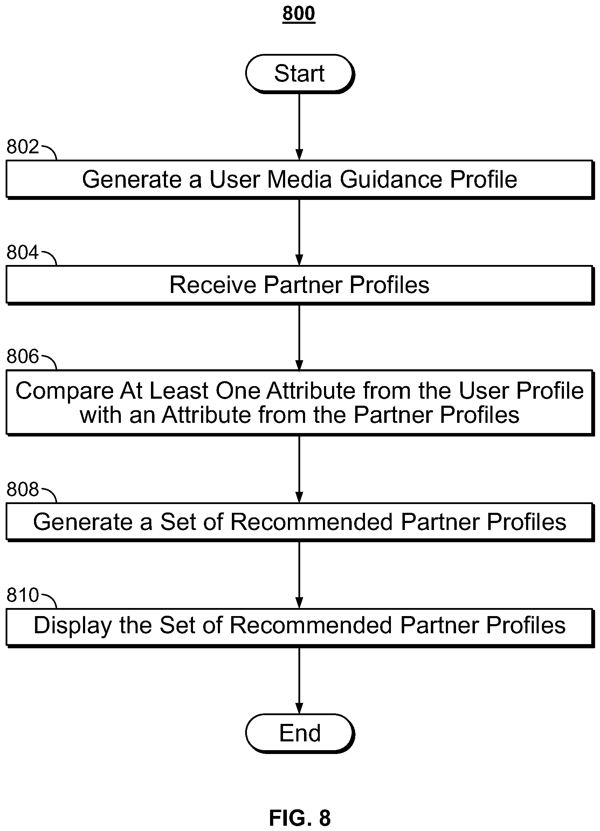

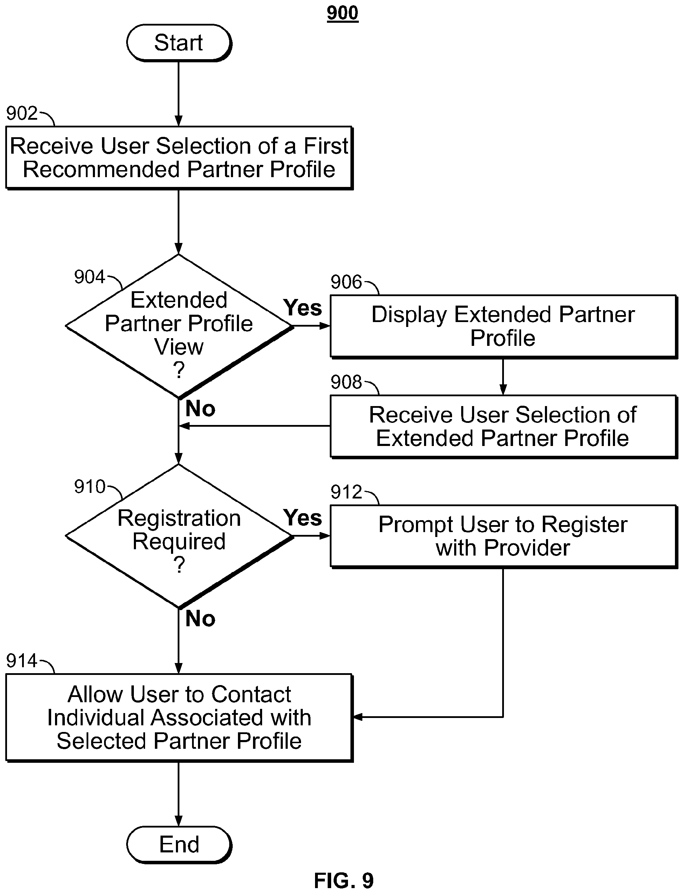

The display screens of FIGS. 5-7 are merely illustrative, and any other suitable technique may be used to recommend matching profiles to a user of a media guidance application. Processes for recommending matching profiles are discussed in more detail below with respect to FIGS. 8 and 9.

The following flow diagrams serve to illustrate processes involved in some embodiments of the present invention. Where appropriate, these processes may, for example, be implemented completely in the processing circuitry of a user equipment device (e.g., processing circuitry 306 of FIG. 3) or may be implemented at least partially in a media guidance source remote from the user equipment devices (e.g., media guidance source 418 of FIG. 4A).

Referring now to FIG. 8, illustrative flow diagram 800 is shown for displaying a set of recommended partner profiles in an interactive media guidance application. At step 802, a media guidance profile may be generated and/or stored, for example, locally in storage 308 of FIG. 3 or remotely at media guidance data source 418 of FIG. 4A. As discussed above, the media guidance profile may be automatically generated by the media guidance application, for example, by monitoring a user's interactions with the media guidance application.

In some embodiments, a client-server system may be used to store media guidance profile data across different platforms. For example, the user's media guidance profile may be updated regardless of whether the user interacts with an online guidance application (e.g., on user computer equipment 404 of FIG. 4A), an interactive television program guide (e.g., on user television equipment 402), or on any other type of guidance application or platform, or any combination thereof.

At step 804, a plurality of partner profiles may be received. The partner profiles may include, for example, text, images, video clips, or any other suitable content that may be displayed in a display screen as discussed above in connection with FIG. 5. The partner profiles may be received using any suitable technique as discussed above in connection with FIGS. 4A and 4B. The partner profiles may be received from any suitable source, such as from a provider remote from a user (e.g., partner profile data source 424 of FIG. 4A). In some embodiments, the received partner profiles may be stored in a storage system local to the viewer (e.g., in a user's set top box).

At step 806 of FIG. 8, at least one attribute from the media guidance profile may be compared with an attribute from the partner profiles, for example, using recommendation module 10 of FIG. 4B. There may be many suitable ways of comparing attributes between the user and the individuals associated with the respective partner profiles in order to determine which partner profiles may be matched with the user. In some embodiments, the media guidance application via the recommendation module may compare "similar" attributes between the user and a plurality of partner profiles. For example, the guidance application may determine whether both parties have a mutual interest in a particular media program or sporting event. In some embodiments, comparing "similar" attributes between the user and a partner profile may not necessarily indicate a relatively strong match. For example, as discussed above, the media guidance application may determine that the user is a fan of the World Cup (e.g., the user may have watched a number of games or selected interactive advertisements relating to the World Cup). However, the user may not be interested in meeting other soccer fans. In some embodiments, the media guidance application via the recommendation module may determine this negative correlation by monitoring the user's selections of partner profiles or bookmarking of partner profiles (e.g., recommended partner profiles 591-594), where the user does not select those partner profiles showing an interest in the World Cup, for example. In some embodiments, the media guidance application may determine this negative correlation in response to a user providing feedback regarding the recommended matches.

In some embodiments, the media guidance application via the recommendation module may compare the media guidance profile with the partner profiles using a relevancy threshold. The interactive media guidance application may search the partner profiles for attributes that are likely to be compatible with the user. The partner profiles may be stored, for example, in a database in storage 308 (FIG. 3), partner profile data source 424 (FIG. 4A) (such as in client-server-based architectures), or partner profile data store 17 (FIG. 4B). The attributes that are searched for may be any suitable attributes associated with the media guidance profile. The interactive media guidance application via the recommendation module may determine whether each partner profile attribute is relevant to the user which, in this embodiment, involves determining whether the attribute is greater than (or equal to) a relevancy threshold. This determination may be performed on each partner profile after it is received, or when the entire set of partner profiles is received. The interactive media guidance application may identify the partner profiles as relevant, for example, by setting a flag associated with the item in a data structure, or metadata, representing the result set.

The interactive media guidance application via the recommendation module may determine whether a minimum number of relevant partner profiles were found. If not, the recommendation module may decrease the relevancy threshold to determine which partner profiles meet the new relevancy threshold. Once the relevancy threshold is set and the minimum number of relevant partner profiles found, the interactive media guidance application in this embodiment may select partner profiles for display based on the comparison. For example, the interactive media guidance application may determine that a preferred number of partner profiles is appropriate for display based on whether the partner profiles are relevant to the user's media guidance profile. Searching based on relevancy thresholds is discussed in more detail in Billmaier et al. U.S. Patent Application Publication No. 2008/0104057 A1, published May 1, 2008.

At step 808, a set of recommended partner profiles may be generated based on the comparison by the recommendation module. The set of recommend partner profiles may be one or more, and may be displayed (step 810) as an overlay over any suitable display screen of the media guidance application including, for example, various guidance screens (e.g., display screens 100 and 200 of FIGS. 1 and 2), program display screens (including broadcast and/or streaming media displays), interactive gaming display screens, or any other suitable display screen. In some embodiments, the set of recommended partner profiles may be displayed as a dedicated screen that may be accessible in any suitable way, such as via navigation of menus and/or options provided in an interactive media guidance application, by pressing a dedicated button in user input interface 310 of FIG. 3, any other suitable technique, or any combination thereof.

Referring now to FIG. 9, illustrative flow diagram 900 is shown for allowing a user to communicate with an individual associated with a selected partner profile. At step 902, a user selection of a first recommended partner profile (e.g., partner profile 591 of FIG. 5) may be received. At step 904, a determination may be made as to whether the selected partner profile has an "extended" partner profile view (e.g., extended partner profile 691 of FIG. 6). The determination can be made, for example, by searching the metadata associated with the selected partner profile.

If there is an extended partner profile view for the selected partner profile, at step 906, the extended partner profile may be displayed, such as the extend partner profile 691 of FIG. 6. If there is no extended partner profile, or in response to another user selection of the extend partner profile, a determination may be made as to whether registration is required to view any further information (e.g., additional personal information or attributes) or to communicate with the individual associated with the selected partner profile. If there is no registration required, the user may thus communicate with the individual associated with the selected profile and/or view the individual's full or complete partner profile. However, if registration is required, the user may be prompted to register with the provider of the partner profile (e.g., using overlay 702 of FIG. 7). After registering with the provider, the user may be granted permissions to communicate with the individual associated with the selected partner profile.

It should be understood that the steps of flow diagrams 800 and 900 are merely illustrative. Any of the steps of flow diagrams 800 and 900 may be modified, omitted, or rearranged, two or more of the steps may be combined, or any additional steps may be added, without departing from the scope of the present invention.

It will be understood that the foregoing is only illustrative of the principles of the invention, and that various modifications may be made by those skilled in the art without departing from the scope of the invention as defined by the claims. Those skilled in the art will appreciate that the present invention may be practiced by other than the described embodiments, which are presented for purposes of illustration and not of limitation, and the present invention is limited only by the claims that follow.

## Claims

1. A method for recommending matching profiles using a media guidance application implemented at least in part on user equipment, the method comprising:
automatically generating a media guidance profile based on monitoring a user's interactions with the media guidance application, wherein monitoring the user's interactions comprises at least one of:
recording instructions from a user to record a program;
recording circumstances surrounding the user changing volume of television audio;
recording whether the user continues to view an advertisement rather than changing channels; and
recording whether the user changes a channel after a program on the channel has ended or continues to watch programming on the channel;
receiving, from a plurality of partner profile providers, partner profiles that include at least one attribute generated by a respective individual associated with a respective partner profile;
comparing at least one attribute from the media guidance profile with an attribute from the partner profiles in order to generate a set of recommended partner profiles, wherein the set includes one or more partner profiles;
generating for display the set of recommended partner profiles, wherein the set of recommended partner profiles comprises information on each respective individual associated with the set of recommended partner profiles; and
in response to a user selection of one of the recommended partner profiles, prompting the user to register with the one of the plurality of partner profile providers associated with the selected one of the recommended partner profiles.

2. The method of claim 1, further comprising:
selecting a first recommended partner profile from the set of recommended partner profiles; and
in response to the selection, displaying additional information about an individual associated with the first recommended profile.

3. The method of claim 2, wherein the comparing further comprises:
determining whether the attribute from the partner profiles meets a relevancy threshold; and
if a preferred number of partner profiles do not meet the relevancy threshold, modifying the relevancy threshold.

4. The method of claim 1, wherein the attribute from the media guidance profile and the attribute from the partner profiles are dissimilar.

5. The method of claim 1, wherein the partner profiles are entirely generated from express input from the respective individual associated with the respective partner profile.

6. The method of claim 1, wherein the partner profile provider is at least one of a matching service, a social-networking service, a professional networking service, and a blogging or microblogging service.

7. The method of claim 1, wherein the user's interactions include at least one of browsing listings for a media program, viewing a media program, setting reminders to view a media program, and recording a media program.

8. A system for recommending matching profiles using a media guidance application implemented at least in part on user equipment, the system comprising:
processing circuitry configured to:
automatically generate a media guidance profile based on monitoring a user's interactions with the media guidance application, wherein monitoring the user's interactions comprises at least one of:
recording instructions from a user to record a program;
recording circumstances surrounding the user changing volume of television audio;
recording whether the user continues to view an advertisement rather than changing channels; and
recording whether the user changes a channel after a program on the channel has ended or continues to watch programming on the channel;
receive, from a plurality of partner profile providers, partner profiles that include at least one attribute generated by a respective individual associated with a respective partner profile;
compare at least one attribute from the media guidance profile with an attribute from the partner profiles in order to generate a set of recommended partner profiles, wherein the set includes one or more partner profiles;
generate for display the set of recommended partner profiles, wherein the set of recommended partner profiles comprises information on each respective individual associated with the set of recommended partner profiles:
in response to a user selection of one of the recommended partner profiles, prompt the user to register with the one of the plurality of partner profile providers associated with the selected one of the recommended partner profiles.

9. The system of claim 8, wherein the processing circuitry is further configured to:
receive a selection of a first recommended partner profile from the set of recommended partner profiles; and
in response to receiving the selection, display additional information about an individual associated with the first recommended profile.

10. The system of claim 9, wherein the user can communicate with an individual associated with the first recommended partner profile upon registering with the provider.

11. The system of claim 9, wherein the attribute from the media guidance profile and the attribute from the partner profiles are dissimilar.

12. The system of claim 9, wherein the user's media guidance profile is generated with express input from the user.

13. The system of claim 9, wherein the set of recommended partner profiles is displayed as a targeted advertisement.

14. The system of claim 9, wherein the user's interactions include at least one of browsing listings for a media program, viewing a media program, setting reminders to view a media program, and recording a media program.

## Patentansprüche

1. Verfahren zum Empfehlen übereinstimmender Profile unter Verwendung einer Medienführeranwendung, die mindestens teilweise auf Benutzerausrüstung umgesetzt ist, wobei das Verfahren Folgendes umfasst:
automatisches Erzeugen eines Medienführerprofils auf Grundlage von Überwachen von Interaktionen eines Benutzers mit der Medienführeranwendung, wobei Überwachen der Interaktionen eines Benutzers mindestens eins der Folgenden umfasst:
Aufzeichnen von Anweisungen von einem Benutzer, ein Programm aufzuzeichnen;
Aufzeichnen von Umständen, die das Ändern einer Lautstärke von Fernsehaudio durch einen Benutzer umgeben;
Aufzeichnen, ob der Benutzer fortfährt, eine Werbung zu schauen, statt den Kanal zu wechseln; und
Aufzeichnen, ob der Benutzer einen Kanal wechselt, nachdem ein Programm auf dem Kanal endet oder ob er weiterfährt, Programme auf dem Kanal zu schauen;
Empfangen von Partnerprofilen von einer Vielzahl von Partnerprofilanbietern, welche mindestens ein Attribut umfassen, das durch eine bestimmte Person erzeugt wurde, die mit einem bestimmten Partnerprofil zusammenhängt;
Vergleichen von mindestens einem Attribut aus dem Medienführerprofil mit einem Attribut aus den Partnerprofilen, um eine Reihe von empfohlenen Partnerprofilen zu erzeugen, wobei die Reihe ein oder mehrere Partnerprofile beinhaltet;
Erzeugen der Reihe von empfohlenen Partnerprofilen zur Anzeige, wobei die Reihe von empfohlenen Partnerprofilen Informationen über jede jeweilige Person umfasst, die mit der Reihe von empfohlenen Partnerprofilen zusammenhängt; und
als Reaktion auf eine Benutzerauswahl eines der empfohlenen Partnerprofile, Auffordern des Benutzers, sich bei dem einen der Vielzahl von Profilanbietern, die mit dem ausgewählten der empfohlenen Partnerprofile zusammenhängen, zu registrieren.

2. Verfahren nach Anspruch 1, das ferner Folgendes umfasst:
Auswählen eines ersten empfohlenen Partnerprofils aus der Reihe von empfohlenen Partnerprofilen; und
als Reaktion auf die Auswahl, Anzeigen zusätzlicher Informationen über eine Person, die mit dem ersten empfohlenen Profil zusammenhängt.

3. Verfahren nach Anspruch 2, wobei das Vergleichen ferner Folgendes umfasst:
Bestimmen, ob das Attribut aus den Partnerprofilen einen Relevanzschwellenwert erfüllt; und
falls eine bevorzugte Anzahl von Partnerprofilen den Relevanzschwellenwert nicht erfüllt, Modifizieren des Relevanzschwellenwerts.

4. Verfahren nach Anspruch 1, wobei das Attribut aus dem Medienführerprofil und das Attribut aus dem Partnerprofil unterschiedlich sind.

5. Verfahren nach Anspruch 1, wobei die Partnerprofile ausschließlich aus ausdrücklicher Eingabe durch die jeweilige Person, die mit dem jeweiligen Partnerprofil zusammenhängt, erzeugt sind.

6. Verfahren nach Anspruch 1, wobei der Partnerprofilanbieter mindestens eins eines Übereinstimmungsdienstes, eines sozialen Netzwerkdienstes, eines professionellen Networking-Dienstes und eines Blogging- oder Mikroblogging-Dienstes ist.

7. Verfahren nach Anspruch 1, wobei die Interaktionen des Benutzers mindestens eins einer Browsing-Liste für ein Medienprogramm, Ansehen eines Medienprogramms, Einstellen von Erinnerungen, ein Medienprogramm anzusehen, und Aufzeichnen eines Medienprogramms umfassen.

8. System zum Empfehlen von übereinstimmenden Profilen unter Verwendung einer Medienführeranwendung, die mindestens teilweise auf Benutzerausrüstung umgesetzt ist, wobei das System Folgendes umfasst:
Verarbeitungsschaltung, die zu Folgenden konfiguriert ist:
automatisches Erzeugen eines Medienführerprofils auf Grundlage von Überwachen einer Interaktion eines Benutzers mit der Medienführeranwendung, wobei das Überwachen der Interaktion des Benutzers mindestens eines der Folgenden umfasst:
Aufzeichnen von Anweisungen von einem Benutzer, ein Programm aufzuzeichnen;
Aufzeichnen der Umstände, die das Ändern der Lautstärke des Fernsehaudios durch den Benutzer umgeben;
Aufzeichnen, ob der Benutzer fortfährt, eine Werbung zu schauen, statt den Kanal zu wechseln; und
Aufzeichnen, ob der Benutzer einen Kanal wechselt, nachdem ein Programm auf dem Kanal endet oder ob er weiterfährt, Programme auf dem Kanal zu schauen;
Empfangen von Partnerprofilen von einer Vielzahl von Partnerprofilanbietern, welche mindestens ein Attribut umfassen, das durch eine bestimmte Person erzeugt wurde, die mit einem bestimmten Partnerprofil zusammenhängt;
Vergleichen von mindestens einem Attribut aus dem Medienführerprofil mit einem Attribut aus den Partnerprofilen, um eine Reihe von empfohlenen Partnerprofilen zu erzeugen, wobei die Reihe ein oder mehrere Partnerprofile beinhaltet;
Erzeugen der Reihe von empfohlenen Partnerprofilen zur Anzeige, wobei die Reihe von empfohlenen Partnerprofilen Informationen über jede jeweilige Person umfasst, die mit der Reihe von empfohlenen Partnerprofilen zusammenhängt; und
als Reaktion auf eine Benutzerauswahl eines der empfohlenen Partnerprofile, Auffordern des Benutzers, sich bei dem einen der Vielzahl von Profilanbietern, die mit dem ausgewählten der empfohlenen Partnerprofile zusammenhängen, zu registrieren.

9. System nach Anspruch 8, wobei die Verarbeitungsschaltung ferner zu Folgendem konfiguriert ist:
Empfangen einer Auswahl eines ersten empfohlenen Partnerprofils aus der Reihe von empfohlenen Partnerprofilen; und
als Reaktion auf Empfangen der Auswahl, Anzeigen zusätzlicher Informationen über eine Person, die mit dem ersten empfohlenen Profil zusammenhängt.

10. System nach Anspruch 9, wobei der Benutzer nach Registrieren mit dem Anbieter mit einer Person kommunizieren kann, die mit dem ersten empfohlenen Partnerprofil zusammenhängt.

11. System nach Anspruch 9, wobei das Attribut aus dem Medienführerprofil und das Attribut aus den Partnerprofilen unterschiedlich sind.

12. System nach Anspruch 9, wobei das Medienführerprofil des Benutzers mit ausdrücklicher Eingabe von dem Benutzer erzeugt ist.

13. System nach Anspruch 9, wobei die Reihe von empfohlenen Partnerprofilen als eine gezielte Werbung angezeigt ist.

14. System nach Anspruch 9, wobei die Interaktionen des Benutzers mindestens eins von Browsing-Listen für ein Medienprogramm, Ansehen eines Medienprogramms, Einstellen von Erinnerungen, ein Medienprogramm anzusehen, und Aufzeichnen eines Medienprogramms beinhalten.

## Revendications

1. Procédé de recommandation de profils de correspondance à l'aide d'une application de guide de média implémentée au moins en partie sur un équipement utilisateur, le procédé comprenant :
génération automatiquement d'un profil de guide de média basé sur la surveillance des interactions d'un utilisateur avec l'application de guide de média, dans lequel la surveillance des interactions de l'utilisateur comprend au moins un de :
instructions d'enregistrement d'un utilisateur pour enregistrer un programme ;
conditions d'enregistrement relatives à l'utilisateur changeant le volume d'audio de télévision ;
enregistrement si l'utilisateur continue à afficher une publicité plutôt que de changer de canaux ; et
enregistrement si l'utilisateur change un canal après qu'un programme sur le canal est terminé ou continue à regarder la programmation sur le canal ;
réception, d'une pluralité de fournisseurs de profils partenaires, de profils partenaires qui incluent au moins un attribut généré par un individu respectif associé à un profil partenaire respectif ;
comparaison d'au moins un attribut du profil de guide de média avec un attribut des profils partenaires afin de générer un ensemble de profils partenaires recommandés, dans lequel l'ensemble inclut un ou plusieurs profils partenaires ;
génération pour affichage de l'ensemble de profils partenaires recommandés, dans lequel l'ensemble de profils partenaires recommandés comprend des informations sur chaque individu respectif associé à l'ensemble de profils partenaires recommandés ; et
en réponse à une sélection utilisateur d'un des profils partenaires recommandés, invitation de l'utilisateur à s'enregistrer auprès de l'un de la pluralité de fournisseurs de profils partenaires associé au sélectionné parmi les profils partenaires recommandés.

2. Procédé selon la revendication 1, comprenant en outre :
sélection d'un premier profil partenaire recommandé de l'ensemble de profils partenaires recommandés ; et
en réponse à la sélection, affichage d'informations supplémentaires sur un individu associé au premier profil recommandé.

3. Procédé selon la revendication 2, dans lequel la comparaison comprend en outre :
détermination si l'attribut des profils partenaires correspond à un seuil de pertinence ; et si un nombre préféré de profils partenaires ne correspondent pas au seuil de pertinence, la modification du seuil de pertinence.

4. Procédé selon la revendication 1, dans lequel l'attribut du profil de guide de média et l'attribut des profils partenaires sont différents.

5. Procédé selon la revendication 1, dans lequel les profils partenaires sont intégralement générés à partir de l'entrée expresse de l'individu respectif associé au profil partenaire respectif.

6. Procédé selon la revendication 1, dans lequel le fournisseur de profils partenaires est au moins un d'un service de correspondance, un service de réseautage social, un service de réseautage professionnel, et un service de blogage ou service de microblogage.

7. Procédé selon la revendication 1, dans lequel les interactions de l'utilisateur incluent au moins un de la navigation de listes pour un programme de média, l'affichage d'un programme de média, la définition de rappels pour afficher un programme de média, et l'enregistrement d'un programme de média.

8. Système de recommandation de profils de correspondance à l'aide d'une application de guide de média implémentée au moins en partie sur un équipement utilisateur, le système comprenant :
circuit de traitement configuré pour :
générer automatiquement un profil de guide de média basé sur la surveillance des interactions d'un utilisateur avec l'application de guide de média, dans lequel la surveillance des interactions de l'utilisateur comprend au moins un de :
instructions d'enregistrement d'un utilisateur pour enregistrer un programme ;
conditions d'enregistrement relatives à l'utilisateur changeant le volume d'audio de télévision ;
enregistrement si l'utilisateur continue à afficher une publicité plutôt que de changer de canaux ; et
enregistrement si l'utilisateur change un canal après qu'un programme sur le canal est terminé ou continue à regarder la programmation sur le canal ;
recevoir, d'une pluralité de fournisseurs de profils partenaires, des profils partenaires qui incluent au moins un attribut généré par un individu respectif associé à un profil partenaire respectif ;
comparer au moins un attribut du profil de guide de média avec un attribut des profils partenaires afin de générer un ensemble de profils partenaires recommandés, dans lequel l'ensemble inclut un ou plusieurs profils partenaires ;
générer pour affichage l'ensemble de profils partenaires recommandés, dans lequel l'ensemble de profils partenaires recommandés comprend des informations sur chaque individu respectif associé à l'ensemble de profils partenaires recommandés ;
en réponse à une sélection utilisateur d'un des profils partenaires recommandés, inviter l'utilisateur à s'enregistrer auprès de l'un de la pluralité de fournisseurs de profils partenaires associé au sélectionné parmi les profils partenaires recommandés.

9. Système selon la revendication 8, dans lequel le circuit de traitement est en outre configuré pour :
recevoir une sélection d'un premier profil partenaire recommandé de l'ensemble de profils partenaires recommandés ; et
en réponse à la réception de la sélection, afficher des informations supplémentaires sur un individu associé au premier profil recommandé.

10. Système selon la revendication 9, dans lequel l'utilisateur peut communiquer avec un individu associé au premier profil partenaire recommandé lors de l'enregistrement auprès du fournisseur.

11. Système selon la revendication 9, dans lequel l'attribut du profil de guide de médial et l'attribut des profils partenaires sont différents.

12. Système selon la revendication 9, dans lequel le profil de guide de média de l'utilisateur est généré avec une entrée expresse de l'utilisateur.

13. Système selon la revendication 9, dans lequel l'ensemble de profils partenaires recommandés est affiché sous forme d'une publicité ciblée.

14. Système selon la revendication 9, dans lequel les interactions de l'utilisateur incluent au moins un de la navigation de listes pour un programme de média, l'affichage d'un programme de média, la définition de rappels pour afficher un programme de média, et l'enregistrement d'un programme de média.
